Europäisches Patentamt

**European Patent Office**

Office européen des brevets

(11) Publication number : **0 448 371 A1**

## (12) EUROPEAN PATENT APPLICATION

(21) Application number : **91302410.5**

(22) Date of filing : **20.03.91**

(51) Int. Cl.⁵ : **H01B 5/10**

(30) Priority : **20.03.90 GB 9006210**

(43) Date of publication of application :
**25.09.91 Bulletin 91/39**

(84) Designated Contracting States :
**AT BE CH DE DK ES FR GB GR IT LI LU NL SE**

(71) Applicant : **BICC Public Limited Company**
**Devonshire House Mayfair Place**
**London W1X 5FH (GB)**

(72) Inventor : **Dawson, John Robert**
**26, Aigburth Hall Avenue**
**Liverpool, L19 9EB (GB)**

(74) Representative : **Ross Gower, Edward Lewis et**
**al**
**BICC Group Patents & Licensing Department**
**Network House 1 Ariel Way**
**London W12 7SL (GB)**

(54) Overhead electric and optical conductor manufacture.

(57) In a simple and inexpensive method of manufacturing a composite flexible overhead electric and optical conductor having a flexible optical waveguide 18 loosely housed in a bore extending throughout the length of the conductor, the flexible electric conductor 10, without a flexible optical guide loosely housed in the bore, is wound around the hub of a cable drum 14 in such a way that each end of the wound conductor is exposed and accessible. The flexible optical guide 18 is then accommodated in the bore of the wound conductor 10 by introducing a leading end of the optical guide into the end of the bore at one exposed end 11 of the wound conductor and by propelling the optical guide along the bore of the wound conductor by fluid drag of a gaseous medium which is passed through the bore in the desired direction of advance at such a pressure that the optical guide is carried along the bore until the optical guide is loosely housed in and throughout the length of the bore of the wound conductor.

EP 0 448 371 A1

*Fig.3.*

# OVERHEAD ELECTRIC & OPTICAL CONDUCTOR MANUFACTURE

This invention relates to composite flexible overhead electric and optical conductors suitable for incorporation in an overhead electric and optical transmission system in which at least one such composite conductor is suspended freely in long lengths between towers or other upstanding supports mutually spaced along the route of the system.

In the Complete Specification of our British Patent No: 1598438 there is described and claimed a composite flexible overhead electric and optical conductor which is now widely used in overhead electric and optical transmission systems both in the United Kingdom and elsewhere and which comprises at least one layer of helically wound bare elongate elements of metal or metal alloy, at least one elongate compartment within and extending throughout the length of the conductor and, loosely housed in the elongate compartment or at least one of the elongate compartments, at least one separate optical fibre and/or at least one optical bundle.

In one preferred embodiment of the composite flexible overhead electric and optical conductor in accordance with our aforesaid patent, the or each elongate compartment is disposed within a substantially circumferentially rigid central core around which the bare elongate elements of metal or metal alloy of the or each layer are helically wound.

It is an object of the present invention to provide an improved method of manufacturing a composite flexible overhead electric and optical conductor in accordance with our aforesaid patent, which method of manufacture is simple and substantially less expensive than methods of manufacture hitherto proposed and used.

According to the invention, the improved method comprises causing a flexible central core to travel in the direction of its length; helically winding around the advancing core at least one layer of bare elongate elements of metal or metal alloy to form a flexible electric conductor having within and extending throughout the length of the conductor at least one bore or other passage; winding the flexible electric conductor around the hub of a cable drum in such a way that each end of the wound conductor is exposed and accessible; and accommodating at least one length of flexible optical guide comprising at least one optical fibre throughout the length of the bore or other passage or of at least one of the bores or other passages within the wound conductor by introducing a leading end of the length of optical guide into the end of said bore or passage at one exposed end of the wound conductor and by propelling the optical guide along said bore or passage of the wound conductor by fluid drag of a gaseous medium which will have no deleterious effect on the optical guide or on the conductor and which is passed through said bore or passage in the desired direction of advance at such a pressure that the length of optical guide is carried along said bore or passage until the length of optical guide is loosely housed in and throughout the length of said bore or passage of the wound conductor.

Preferably, the length of optical guide loosely housed in the bore or other passage of the wound conductor will substantially exceed the length of the bore or passage so that there is an excess length of optical guide within the bore or passage.

At least one said bore or other passage may be within the flexible central core - in which case the flexible central core will be substantially circumferentially rigid - or said bore or other passage may be within a bare metal elongate element, or between adjacent bare metal elongate elements, of the layer or at least one of the layers of helically wound bare metal elongate elements.

Where the or each bore or other passage is within a bare metal elongate element, or between adjacent bare metal elongate elements, of the layer or at least one of the layers of helically wound bare metal elongate elements, the flexible central core may be a single bare wire or other elongate element of metal or metal alloy or a plurality of such bare wires or other elongate elements assembled together.

The leading end the length of optical guide may be introduced into the end of said bore or passage at either exposed end of the wound conductor but, preferably, it is introduced into the end of said bore or passage at the exposed leading end of the wound conductor, that is to say the end of the wound conductor nearer the hub of the cable drum, and, for this purpose, preferably the leading end of the wound conductor protrudes through a hole in a flange of the cable drum.

By virtue of the fact that both ends of the wound conductor are exposed and accessible, after a flexible optical guide has been accommodated in the or a bore or other passage in the wound conductor, the flexible optical guide can be readily tested.

The or each flexible optical guide may be propelled along the bore or other passage of the wound conductor by fluid drag of the gaseous medium using the method and apparatus as described in our British Patent Specification No: 2179471B but it is to be clearly understood that any suitable method hitherto proposed and used of propelling a flexible optical guide along a bore or other passage by fluid drag of a gaseous medium can be employed.

Where the advancing flexible central core is substantially circumferentially rigid and has at least one bore or other passage within and extending throughout its length, preferably the central core comprises a seamless tube of aluminium or of other metal or metal alloy having a single central bore - in which case the seamless tube may be made by the Conform process - but, where it is desired that the central core includes two or more passages extending within and throughout the length of the core, the central core preferably is of composite form and comprises a central elongate member of metal or metal alloy having in its outer surface a plurality of circumferentially spaced grooves extending helically around the member and, surrounding the helically grooved central member, a separately formed circumferentially continuous wall of metal or metal alloy, which wall may consist of a longitudinally extending, transversely folded strip of metal or metal alloy.

The bare metal elongate elements of the or each layer may each be of circular or non-circular transverse cross-section. Where two or more layers of bare metal elongate elements are helically wound around the advancing central core, preferably the elongate elements of adjacent layers are helically wound in opposite directions.

The or each flexible optical guide may be a separate optical fibre or it may be an optical fibre element comprising two or more optical fibres assembled together such as, for example, a flexible plastics tube having two or more optical fibres loosely housed in the bore of the tube or, for example, an optical fibre ribbon comprising a plurality of optical fibres extending side by side with their axes lying in a substantially common plane. One optical fibre ribbon structure which is especially suitable for use in the improved method of the present invention is described and claimed in the specification of our British Patent No: 2141558B.

The invention also includes a composite flexible overhead electric and optical conductor when manufactured by the improved method hereinbefore described.

The invention is further illustrated by a description, by way of example, of the preferred method of manufacturing a composite flexible overhead electric and optical conductor with reference to the accompanying drawings, in which:-

Figure 1 is a transverse cross-sectional view of the composite overhead flexible electric and optical conductor to be manufactured by said preferred method;

Figure 2 is a diagrammatic sectional side view of preferred apparatus used for introducing a flexible optical guide into the central bore of the wound electric conductor, and.

Figure 3 is a diagrammatic pictorial view of the apparatus employed in effecting the final step in said preferred method.

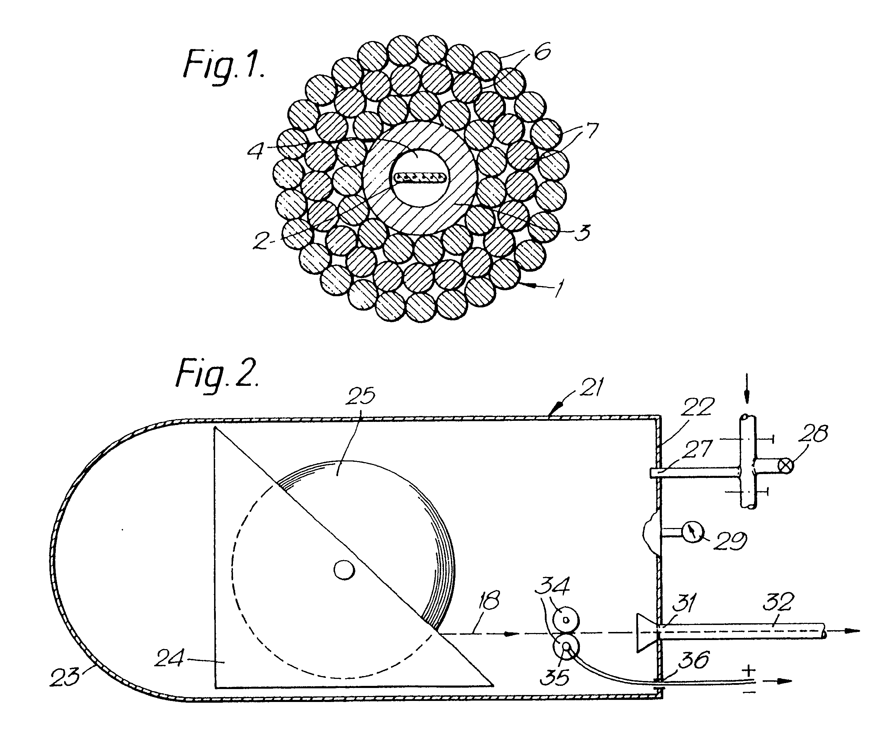

Referring to Figure 1, the composite flexible overhead electric and optical conductor 1 to be manufactured by the preferred method of the invention comprises a central seamless circumferentially rigid aluminium tube 3 in the bore 4 of which throughout the length of the conductor is loosely housed a flexible optical guide 2, the length of the optical guide exceeding the length of the tube. The seamless aluminium tube 3 is surrounded by three layers 6 of helically wound bare aluminium wires 7 each of circular cross-section, the helical lay of the wires of each layer being of opposite hand to that of the helical lay of the wires of the or each adjacent layer.

The flexible optical guide 2 may be of any one of a number of forms including a separate optical fibre and an optical fibre element comprising two or more optical fibres, e.g. an optical fibre ribbon.

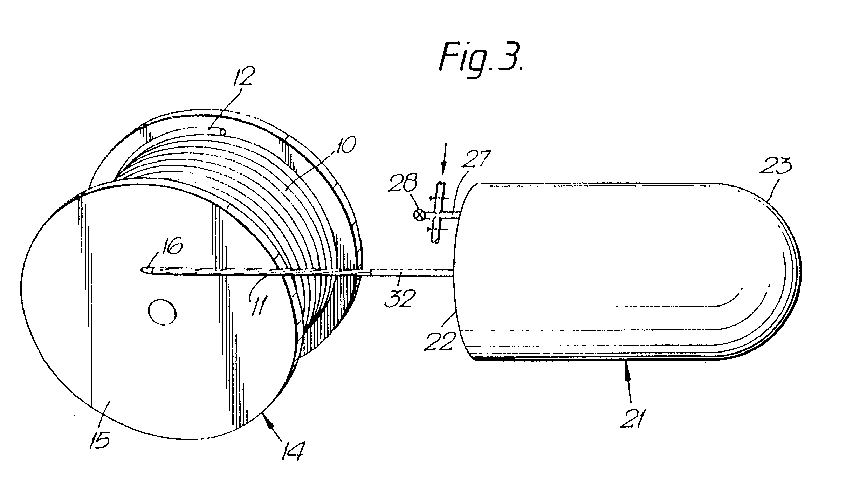

In the preferred method of manufacturing the composite flexible overhead electric and optical conductor 1 shown in Figure 1, the steps in the manufacture of the electric conductor that are effected prior to introduction of the flexible optical guide 2 are conventional and well known in the art. The central seamless circumferentially rigid aluminium tube 3 - which may be formed by the Conform extrusion process or by any other suitable extrusion process - is caused to travel in the direction of its length towards and through stranding apparatus (not shown) at which three layers 6 of aluminium wires 7 are helically wound around the advancing tube, the wires of each of the outer two layers being helically wound in the opposite direction to that of the helically wound wires of the underlying layer. Downstream of the stranding apparatus, the leading end 11 of the flexible electric conductor 10 so formed is threaded through a hole 16 in a flange 15 of a cable drum 14 (Figure 3) so that it is exposed and accessible and the flexible conductor is then wound around the hub of the drum leaving the trailing end 12 of the wound conductor exposed and accessible.

Referring to Figures 2 and 3, the preferred apparatus used for introducing a flexible optical guide into the central bore of the wound electric conductor 10 comprises a substantially fluid-tight housing 21 of elongate shape having, at one end of the housing, an end wall 22 and, at the other end of the housing, an end wall 23 of hemi-spherical shape. Mounted in the housing 21 is a pay-off stand 24 on which is freely pivotally mounted a reel 25 on which is wound a flexible optical guide 18.

In the end wall 22 of the housing 21 is an inlet port 27 through which pressurised air from a source (not shown) can be introduced into the housing, the rate of introduction of the air being controllable by a valve 28. A visual indication of the pressure of the air within the housing 21 is given by a pressure meter 29.

Connected to an outlet 31 in the end wall 22 of the housing 21 is a pipe 32 of transparent plastics material for connection to the central bore of the wound electric conductor 10 at its leading end 11.

Positioned within the housing 21 between the reel 25 and the outlet 31 is a pair of rubber-coated pinch wheels 34, one of which is rotatably driven through a gear box (not shown) by a 12 v.d.c. motor 35, the leads from the motor passing through a fluid-tight seal in an aperture 36 in the end wall 22 via an electro mechanical relay (not shown), controlled by a programmable controller, to a power supply (not shown).

The housing 21 may have at least one window in its wall and may incorporate an internal lighting system to enable the behaviour of the flexible optical guide 18 and the reel 25 to be continuously monitored, thereby giving an indication of any obstruction in the central bore of the wound electric conductor 10.

In employing the apparatus shown in Figure 2 to introduce the flexible optical guide 18 from the reel 25 into the bore of the flexible electric conductor 10 wound on the hub of the cable drum 14, the flexible optical guide is passed from the reel through a guide tube (not shown) between and in contact with the pair of wheels 34, through another guide tube (not shown) and through the pipe 32. A flexible lightweight body,(not shown) similar in shape to a parachute or umbrella and having a transverse cross-sectional area substantially greater than that of the optical guide 18 may be attached to the leading end of the flexible guide and be introduced into the central bore of the wound conductor 10 at its leading end 11. The pipe 32 is then connected to the central bore of the flexible conductor 10 at its leading end 11 to effect a fluid-tight seal.

Air under pressure is then introduced into the housing 21 through the inlet port 27 so that the housing is substantially filled with air at a predetermined pressure, the hemi-spherical end wall 23 of the housing being so shaped as to deflect the air smoothly so that it flows towards and out of the outlet 31 through the pipe 32 and into the central bore of the wound conductor 10. As the pressure of the air within the housing 21 approaches the required level, the pair of wheels 34 is rotatably driven by the motor 35 at continuously varying speeds between upper and lower limits to produce a pulsing effect serving to provide an intermittent release of flexible optical guide 18 from the reel 25. The rate at which the flexible optical guide 18 is unwound intermittently from the reel 25 by the pair of wheels 34 and the pressure and rate at which air is continuously introduced into the fluid-tight housing 21 are such that regular pulsed progression of the flexible optical guide along the pipe 32 and into the central bore of the wound conductor 10 is produced by combination of the continuous varied drive and fluid drag of the air; where a flexible lightweight body is attached to the leading end of the flexible optical guide, the injected air will bear against the flexible body which assists in effecting advance of the flexible optical guide along the central bore. The process is continued until the desired length of flexible optical guide 18 is loosely housed in and throughout the length of the central bore of the wound conductor 10.

The improved method of the invention has the very important advantage that the cost of manufacture of the composite flexible overhead electric and optical conductor is substantially reduced because the or each flexible optical guide is not accommodated in the electric conductor during manufacture of the conductor. Thus, conventional and long proved successful methods of manufacturing the electric conductor can be used. Furthermore, a flexible optical guide of any desired form can subsequently be accommodated in a bore or other passage in a wound electric conductor at any time as and when a particular composite flexible overhead electric and optical conductor is required by a customer. Thus, a manufacturer need only keep in store standard forms of the flexible overhead electric conductor having throughout its length at least one bore or other passage.

## Claims

1. A method of manufacturing a composite flexible overhead electric and optical conductor which comprises causing a flexible central core to travel in the direction of its length; helically winding around the advancing core at least one layer of bare elongate elements of metal or metal alloy to form a flexible electric conductor having within and extending throughout the length of the conductor at least one bore or other passage; and winding the flexible electric conductor around the hub of a cable drum in such a way that each end of the wound conductor is exposed and accessible; characterised in that at least one length of flexible optical guide 18 comprising at least one optical fibre is accommodated throughout the length of the bore or other passage or of at least one of the bores or other passages within the wound conductor 10 by introducing a leading end of the length of optical guide into the end of said bore or passage at one exposed end 11 of the wound conductor and by propelling the optical guide along said bore or passage of the wound conductor by fluid drag of a gaseous medium which will have no deleterious effect on the optical guide or on the conductor and which is passed through said bore or passage in the desired direction of advance at such a pressure that the length of optical guide is carried along said bore or passage until the length of optical guide is loosely housed in and throughout the length of said bore or passage of the wound conductor.

2. A method as claimed in Claim 1, wherein the length of optical guide 18 loosely housed in and throughout the length of the bore or other passage of the wound conductor 10 will substantially exceed the length of the bore or passage so that there is an excess length of optical guide within the bore or passage.

3. A method as claimed in Claim 1 or 2, wherein the flexible central core is substantially circumferentially rigid and said at least one bore or other passage is within the flexible central core.

4. A method as claimed in Claim 3, wherein the central core comprises a seamless tube of aluminium or other metal or metal alloy having a single central bore.

5. A method as claimed in Claim 4, wherein the seamless tube is formed by the Conform extrusion process.

6. A method as claimed in Claim 3, wherein the central core is of composite form and comprises a central elongate member of metal or metal alloy having within its outer surface a plurality of circumferentially spaced grooves extending helically around the member and, surrounding the helically grooved central member, a separately formed circumferentially continuous wall of metal or metal alloy.

7. A method as claimed in any one of the preceding Claims, wherein the leading end of the length of optical guide is introduced into the end of said bore or passage at the exposed leading end 11 of the wound conductor 10.

8. A method as claimed in Claim 7, wherein the leading end 11 of the wound conductor 10 protrudes through a hole in a flange 15 of the cable drum 14.

9. A method as claimed in any one of the preceding Claims, wherein the or each flexible optical guide is a separate optical fibre.

10. A method as claimed in any one of Claims 1 to 8, wherein the or each flexible optical guide comprises an optical fibre element comprising two or more optical fibres assembled together.

Fig.1.

Fig.2.

Fig.3.

## EUROPEAN SEARCH REPORT

**European Patent Office**

**Application Number**

| | DOCUMENTS CONSIDERED TO BE RELEVANT | | EP 91302410.5 |
|---|---|---|---|
| Category | Citation of document with indication, where appropriate, of relevant passages | Relevant to claim | CLASSIFICATION OF THE APPLICATION (Int. Cl.5) |
| Y | EP - A1 - 0 279 006 (NIPPON STEEL) * Abstract; fig. * -- | 1-7,9, 10 | H 01 B 5/10 |
| D,Y | GB - A - 1 598 438 (BICC) * Claims; page 3, lines 112 -121; fig. 3,6,9,15 * -- | 1-3,7, 9,10 | |
| Y | GB - A - 2 179 471 (BICC) * Abstract; fig. * -- | 1 | |
| Y | US - A - 4 723 832 (OKAZATO et al.) * Abstract; column 4, lines 31-36; fig. * -- | 4,5 | |
| Y | EP - A1 - 0 146 757 (SUMITOMO) *. Abstract; page 1, lines 11 -18; fig. 1-4 * ---- | 6 | TECHNICAL FIELDS SEARCHED (Int. Cl.5) H 01 B G 02 B 6/00 |

The present search report has been drawn up for all claims

| Place of search | Date of completion of the search | Examiner |
|---|---|---|
| VIENNA | 20-06-1991 | KUTZELNIGG |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)